# EUROPEAN PATENT APPLICATION

(11) **EP 4 002 834 A1**
(43) Date of publication of application: **25.05.2022**
(21) Application number: 20207952.1
(22) Date of filing: 17.11.2020
(51) Int. Cl.: H04N 5/357, H04N 5/32, H04N 5/345

(54) **REMOVING STRIPE NOISE ARTIFACTS FROM A DIGITAL IMAGE**

(71) Applicant: Koninklijke Philips N.V., 5656 AG Eindhoven (NL)
(72) Inventor: MAACK, Hanns-Ingo, 5656 AE Eindhoven (NL); KOEPNICK, Johannes, 5656 AE Eindhoven (NL)
(74) Representative: Philips Intellectual Property & Standards

(57) **Abstract**

EMI (electromagnetic interference) and unwanted detector movement may affect digital images causing artifacts to occur in clusters of adjacent lines as stripe noise. There are therefore provided devices and methods for removing stripe noise artifacts from a digital image. The method comprises receiving the digital image as an input image captured by a detector using a non-progressive readout mode in which a readout line order in the time domain differs from a detector line order in the spatial domain; re-sorting lines in the input image to correspond to their detector line order in the spatial domain, wherein the re-sorting causes a cluster of noise-affected lines which are adjacent in the input image to be dispersed in the re-sorted image; and applying a stripe filter to the re-sorted image to remove the stripe noise artifacts. The combination of the non-progressive readout mode and the re-sorting renders the stripe noise more suitable for removal by the stripe filter.

## Description

### FIELD OF THE INVENTION

The invention relates to removing stripe noise artifacts from a digital image particularly in the context of digital radiography and especially x-ray imaging.

### BACKGROUND OF THE INVENTION

In digital radiography (DR), motors, switches and other electronic components introduce electromagnetic signals into the DR detector resulting in artifacts in the captured image. This problem is referred to as EMI (electromagnetic interference) and is particularly challenging in intensive care units where a lot of electrical equipment is close to the patient (e.g. LVADs, high-voltage generators, WiFi routers etc.). Sometimes the artifact occurs in a cluster of adjacent lines thus forming a wide stripe. In addition, unwanted movement of the detector as a result of mechanical impact or vibrations can also introduce stripes in the captured image. Stripes can be removed from the generated image using a stripe filter. However, the stripes can resemble clinical structures such as cables, bone edges, implants, catheters, and so on. It is difficult to remove such stripes without also losing potentially useful image information.

### SUMMARY OF THE INVENTION

There is therefore a need for techniques to mitigate or remove stripe artifacts in digital radiography images while preserving as much useful image information as possible. This need is met by the subject-matter of the independent claims. Optional features are set forth by the dependent claims.

According to a first aspect, there is provided a method for removing stripe noise artifacts from a digital image. The method comprises receiving the digital image as an input image captured by a detector using a non-progressive readout mode in which a readout line order in the time domain differs from a detector line order in the spatial domain; re-sorting lines in the input image to correspond to their detector line order in the spatial domain, wherein the re-sorting causes a cluster of noise-affected lines which are adjacent in the input image to be dispersed in the re-sorted image; and applying a stripe filter to the re-sorted image to remove the stripe noise artifacts.

By "non-progressive readout" is meant that at least two adjacent lines in the pixel array of the detector are read out non-progressively, non-consecutively, and more preferably that no two lines which are adjacent in the spatial domain are read out consecutively in the time domain. The non-progressive scan may thus be referred to as a nonconsecutive scan and may take the form of an interlaced or interline scan, for example.

With such a readout, perturbations caused by EMI or caused by time-dependent interferences (e.g. mechanical impact such as vibrations or shocks) are less likely to appear in consecutive lines in the re-sorted image, such that the artifact no longer resembles clinical structures and correction becomes easier. Conventionally, progressive readout modes are used in x-ray detectors and fluoroscopic systems in order to minimize image noise at critical mid-to-high spatial frequencies. The inventors have come to the counterintuitive recognition that using an interlaced readout mode shifts noise artifacts to higher spatial frequencies at which stripe filters or de-striping algorithms are more effective.

In that regard, the effect of the re-sorting in causing the cluster of noise-affected lines which are adjacent in the input image (in the time domain) to be dispersed in the re-sorted image (in the spatial domain), may be restated in that the re-sorting causes (for some noise frequencies) a spectral shift of stripe noise artifacts appearing in the input image from lower to higher spatial frequencies, or, in other words, the re-sorting causes an increase in the spatial frequency of (some) stripe noise artifacts. Stated another way, the combination of the non-progressive readout and the re-sorting effectively reduces the frequency at which the stripe noise is sampled to a sampling frequency that is less than (e.g. one half of, one quarter of, etc.) the line readout frequency, with the resulting noise aliasing causing the shift in spatial frequency of some stripe noise artifacts during re-sorting. The combination of the non-progressive readout and the re-sorting may be referred to as re-sampling. In this way, a wide stripe noise artifact in the cluster of adjacent noise-affected lines in the input image may become an intermittent narrow stripe noise artifact in the re-sorted image. The stripe noise is thus dispersed, its sparsity increased. Stated another way, at least one line of the cluster is separated from the rest. Preferably, all adjacent lines in the cluster are separated from one another after re-sorting. In any case, the result is to render the stripe noise artifact more suitable for removal by the stripe filter.

As mentioned, the non-progressive readout mode may comprise an interlaced readout mode comprising at least first and second consecutive readout cycles, wherein a respective group of lines is read out during each readout cycle. Groups in the context of the present disclosure may be non-overlapping. In particular, the interlaced readout mode may be a twofold interlaced readout mode, with odd-numbered lines being read out during one of the first and second readout cycles, and even-numbered lines being read out during the other of the first and second cycles. The lines in each group may be read out sequentially (e.g. in order of increasing detector line number) during the respective readout cycle. Non-sequential line read out orders are also possible within each group, as discussed further below.

Multifold interlaced readouts are also possible, as described further herein, such as twofold, threefold, fourfold, and sixfold interlaced readouts, in which the interlaced readout mode comprises more than two consecutive readout cycles, with each readout cycle being associated with a respective group of lines. Each readout cycle leads to the production of one field of the full image frame. In one example, either (i) the interlaced readout mode comprises a twofold interlaced readout and the re-sorting comprises a twofold re-sorting followed by a fourfold re-sorting, or (ii) the interlaced readout mode comprises a fourfold interlaced readout and the re-sorting comprises a fourfold re-sorting followed by a twofold re-sorting. Such an arrangement has a particularly advantageous effect on the spatial frequency of the stripe noise artifacts, as explained further below. A parallel implementation of the twofold and fourfold re-sorting may also be possible.

The order in which lines are read out from the detector as a whole or from a group of lines may be any non-progressive order which reduces the sampling frequency of stripe noise artifacts. For example, the non-progressive readout mode may operate to read out the lines from the detector as a whole, or from a said group, in a random line order.

The method may further comprise applying a stripe filter to the input image before re-sorting. In this step, high frequency patterns can be removed but low frequency patterns may remain. Thus proposed is a non-progressive (e.g. interlaced) readout in combination with a two-step de-striping algorithm: the first step being performed on the input image (in the readout line order) and the second on the re-sorted image (in the detector line order). Applying the stripe filter before re-sorting may comprise generating a map identifying lines in the input image that are affected by stripe noise and lines that are unperturbed, with applying the stripe filter to the re-sorted image comprising modifying only the unperturbed lines.

By "re-sorting" is meant reordering, rearranging, e.g. de-interlacing/de-interlining/de-interleaving, the lines of pixels in the input image (which appear in the readout line order, i.e. the chronological order in which the lines were read out) such that they appear in the re-sorted image in the order in which the corresponding lines of pixels (i.e. array elements) appear in the pixel array of the detector in the spatial domain, i.e. in the detector line order.

By "readout" is meant a readout period in which individual lines are wholly or partially read out following an exposure period in which all lines are exposed to x-rays. A readout may also be referred to as a scan.

The method may be computer implemented, as described further below. Additionally or alternatively, the method may be performed by hardware, such as digital image processing circuitry or a digital image processor, e.g. that of the detector described herein, or any combination of software and hardware. The method may be performed by components internal to or external to the detector. In the latter case, the received digital image may be accompanied by metadata mapping the readout line order to the detector line order, or some other indication of said mapping may be provided or made available to the components performing the method. When the method is performed by the detector, the method may further comprise capturing the input image using the detector using the non-progressive readout mode.

According to a second aspect, there is provided a computing device comprising a processor configured to perform the method of the first aspect. The computing device may be the detector described herein.

According to a third aspect, there is provided a computer program product comprising instructions which, when executed by a computing device, enable/cause the computing device to carry out the method of the first aspect.

According to a fourth aspect, there is provided a computer-readable medium comprising instructions which, when executed by a computing device, enable/cause the computing device to carry out the method of the first aspect.

According to a further aspect, there is provided a method for removing stripe noise artifacts from a digital image, the method comprising receiving the digital image as an input image captured by a detector using multiple incomplete readouts, wherein each line is partly read out multiple times, optionally at random time points, the method further comprising averaging (or selecting median values from, or applying an outlier suppression method to) the resulting signal portions to obtain a noise-compensated image. A corresponding system is also provided.

The invention may include one or more aspects, examples, or features in isolation or combination whether or not specifically disclosed in that combination or in isolation.

Further aspects, examples, and features of the invention will become apparent from and be elucidated with reference to the embodiments described hereinafter.

### BRIEF DESCRIPTION OF THE DRAWINGS

A detailed description will now be given, by way of example only, with reference to the accompanying drawings, in which:
Fig. 1 illustrates a readout matrix for an x-ray detector;
Fig. 2 illustrates a source of EMI affecting a detector including the readout matrix of Fig. 1;
Figs. 3A-F show artifacts in images generated by the detector when affected by EMI;
Figs. 4 illustrates a method of removing stripe noise artifacts from a digital image;
Fig. 5 illustrates an interlaced readout mode of the readout matrix of Fig. 1;
Fig. 6 illustrates the dispersal or shift in spatial frequency of a stripe noise artifact when performing an interlaced readout as compared to a progressive readout;
Fig. 7 illustrates removal of a stripe noise artifact by a stripe filter;
Fig. 8 illustrates performance considerations relating to the stripe filter;
Figs. 9A-F illustrate the relative merits of various multifold interlaced readout modes in relation to different noise frequencies;
Figs. 10A-C illustrate the effects of re-sorting on the spatial frequency of noise at various frequencies;
Fig. 11 illustrates a computing device that can be used in accordance with the systems and methods disclosed herein.

### DETAILED DESCRIPTION OF EMBODIMENTS

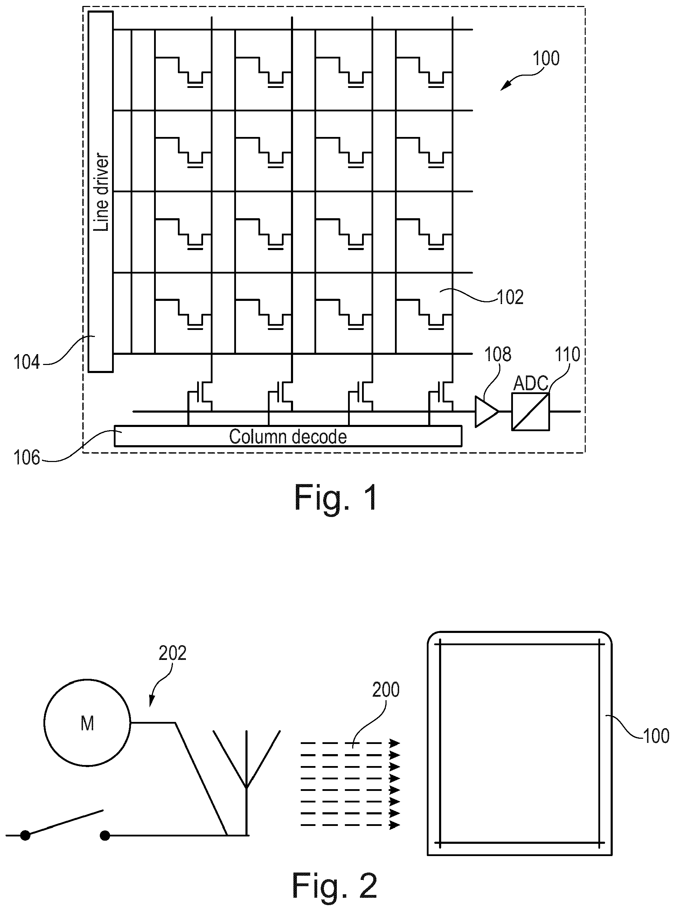

Fig. 1 schematically represents a readout matrix of an x-ray detector 100 or digital flat panel detector 100. The detector 100 comprises a scintillator (not shown) that converts x-ray photons received on the detector surface during examinations to lower energy (light) photons. The readout matrix takes the form of an amorphous silicon active matrix comprising a two-dimensional array of elements (pixels) 102 arranged in rows (lines) and columns which convert the light photons to electrical signals, which are representative of the number of photons or the intensity of radiation impacting individual pixels 102 of the detector surface. Each pixel 102 comprises a photodiode and a transistor. All pixels 102 of one line are connected to the same address line that is set to a certain voltage by a line driver 104 when the pixels 102 of that line are to be addressed. The pixels 102 of each column are connected to the same readout line, which leads to a column decoder 106, which is in turn connected to a charge amplifier 108 and to an analog-to-digital converter 110 to amplify and digitize the signals on that readout line.

During a progressive (regular) readout, the line driver 104 consecutively addresses the lines of pixels 102 in the array, and in each step the signals of each line are passed to the column decoder 106 via the readout lines, such that the signals are read out line by line from the first line to the last line. The signals so read out are then passed to a digital image processor (not shown) configured to generate an image for display.

As shown in Fig. 2, during the readout, the detector 100 may be subject to EMI 200 emanating from an external source 202 such as a motor, switch, WiFi-enabled device or other source. The electromagnetic radiation 200 can contain bursts (a single line is affect or a group of adjacent lines), hum (the pattern shows a periodicity in the y-direction, like a sinusoidal shape), and other kinds of noise.

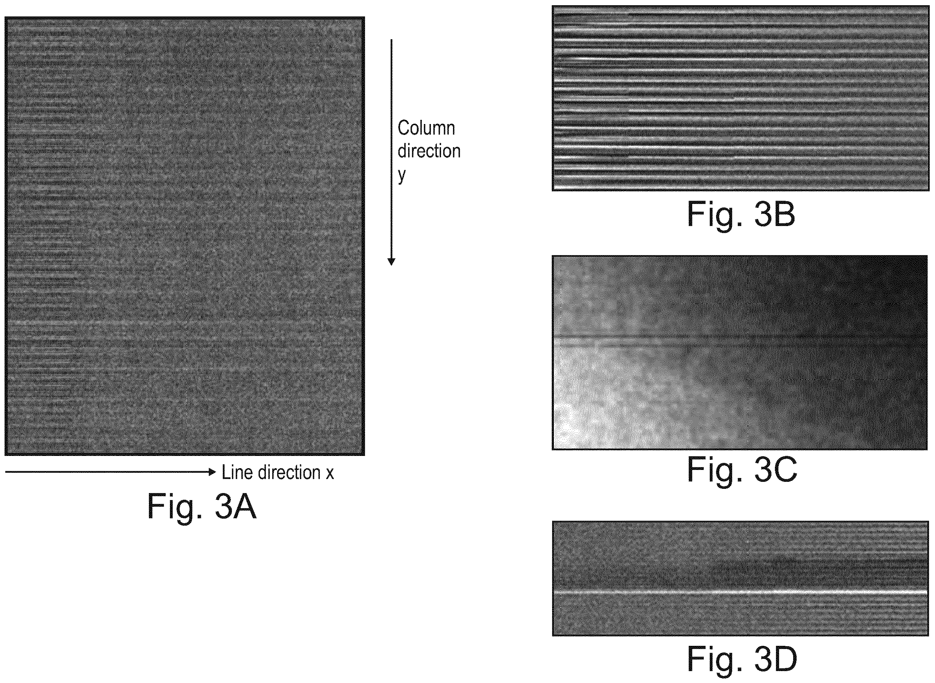

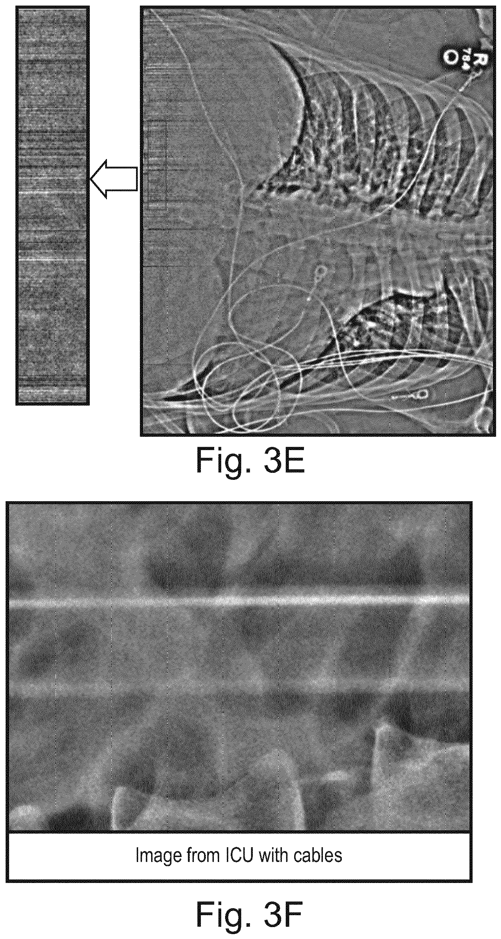

Figs. 3A-F show interference patterns appearing in images generated by the detector 100 when subjected to EMI. The EMI can be described as a sinusoidal signal in the time domain. Because data for all pixels 102 on each row are acquired at the same time, they are affected by the EMI with the same phase, such that the EMI pattern is generally correlated within the lines (in the line direction or x-direction). According to the phase of the EMI, the line may be darker or brighter. The interference thus appears as a row correlated noise (RCN) type of artifact that is seen as lines or bands in the row direction of the image. Such artifacts are referred to herein as stripe noise. If the strength of the EMI is the same across the width of the detector 100, the degree of perturbation is the same for all pixels in a row of the image. However, the susceptibility of the columns can be different: depending on the location of the source 202 relative to the detector 100, the perturbation can diminish from one side of the detector 100 to the other with increasing distance to the source 202. In the case shown in Fig. 2, the EMI 200 is stronger on the left side of the detector 100 such that the left-hand side of the resulting image may show a stronger EMC pattern than the rest, as illustrated by Fig. 3A. Depending on the nature of the noise, the resulting interference pattern may take different forms. As shown in Fig. 3B, the artifact may appear as a high-frequency periodical stripe pattern, for example as the result of hum from an electrical device. Fig. 3C shows narrow stripes caused for example by noise from switching events. Patterns such as those shown in Figs. 3B and 3C may readily be removed by using a conventional de-striping algorithm or stripe filter. A problem occurs, however, when the pattern extends over several lines in the image, as shown in Fig. 3D, thus forming a cluster or wide stripe. Such multiline patterns may be the result of burst noise comprising a periodical perturbation with a low-frequency component (in addition to any other high-frequency components already mentioned). This translates into a low-frequency sinusoidal pattern in the y-direction, with there being correlation in both the y-direction and in the x-direction. Fig. 3E relates to one clinical example in which the generated image is affected by an artifact comprising wide stripes, as visible on the left of the image, with the image also depicting clinical structures - in this case cables - which at times closely resemble the wide stripes. The resemblance is even clearer in the image shown in Fig. 3F, in which the cables are barely distinguishable from the wide stripes. Such wide stripes may be indistinguishable from other clinical structures such as implant parts, bone edges, and so on. Removing such wide stripes using the stripe filter would be harmful to the image in such cases.

Proposed herein are systems and methods of image acquisition and image processing that help to remove wide-stripe artifacts such as that shown in Fig. 3F.

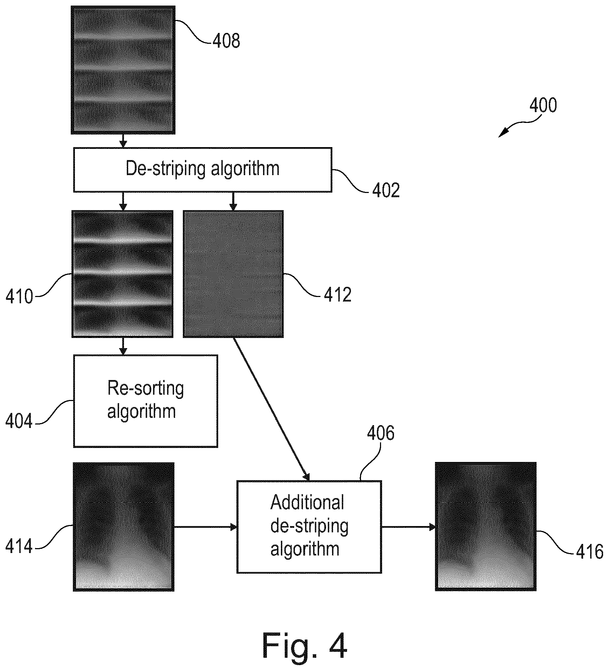

Fig. 4 depicts a method of removing stripe noise according to one example of the present disclosure. In the first (optional) step 402, an input image 408 obtained using an interlaced scan is processed by a de-striping algorithm. The result is an intermediate image 410 in which the main EMI pattern has been removed. Also produced is a stripe density image 412 or map which identifies the lines that are affected by EMI. Other lines are less affected or not affected. A re-sorting algorithm is then applied at step 404 on the intermediate image (or on the input image if the first de-striping algorithm is not applied), resulting in a re-sorted image 414. Most artifacts are removed or at least reduced in the re-sorted image but some remain and show up as a high-frequency pattern. An additional de-striping algorithm is then applied at step 406, resulting in an output image 416 with no EMI perturbation. The stripe filter which is used in this step may the same as or different to the one used in step 402. The remaining high-frequency stripe pattern is removed and, during this step, the unperturbed lines are taken as reference and are not modified. The reference lines, those lines identified as being free of the EMI signal, may be used to interpolate the lines affected by EMI. This interpolation can be implemented by using a filter kernel, for example a median filter kernel.

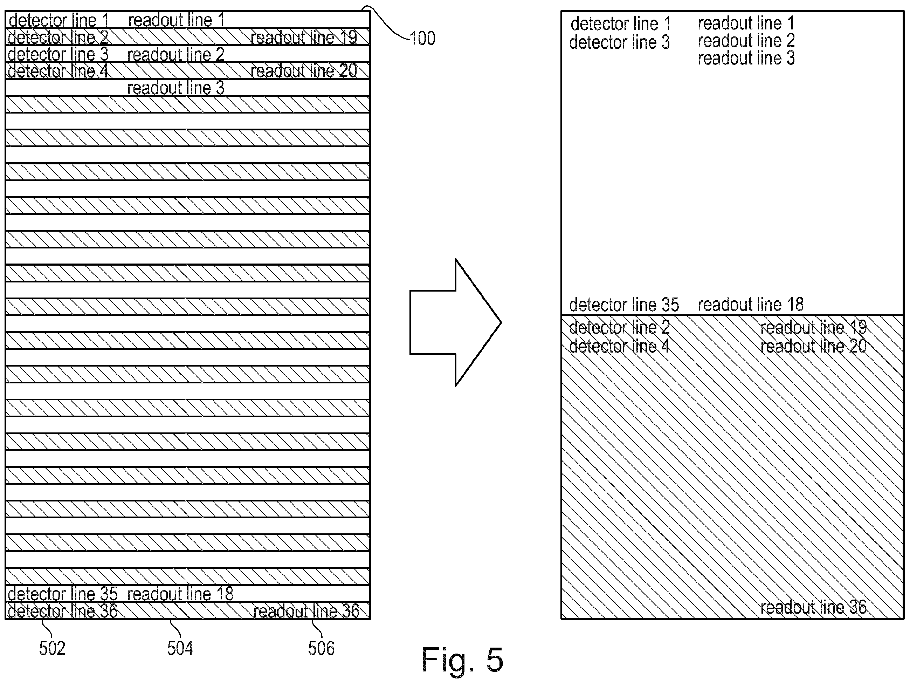

Fig. 5 schematically illustrates the interlaced scan or readout procedure using the detector 100. The left-hand part of Fig. 5 shows the lines in the pixel array of the detector 100 as they appear in the spatial domain. As can be seen from the numbers appearing in the left-hand column 502 of the left-hand part of Fig. 5, i.e. those preceded by the text "detector line", the lines are numbered consecutively in the spatial domain. In this example the pixel array includes 36 lines consecutively numbered as detector lines 1-36. Such ordering of lines in the pixel array or spatial is referred to herein as the "detector line order" or "detector order". Also illustrated in Fig. 5 is what is referred to herein as the "readout line order". The numbers appearing in the middle 504 and right-hand 506 columns of the left-hand part of Fig. 5, i.e. those preceded by the text "readout line", indicate the readout line order in the time domain, i.e. the chronological order in which the lines are read out. In this example, the odd lines are read out first, followed by the even lines. The right-hand part of Fig. 5 illustrates the chronological order in which the lines are read out or scanned in the time domain, i.e. the readout line order. As can be seen the odd lines were read out first, which forms a first field of the image frame, and then the even lines are read out, forming a second field of the image frame. The first field may be viewed as being captured during a first exposure cycle in the second field may be viewed as being captured during a second exposure cycle. An image such as that shown on the right in Fig. 5, with the lines appearing in the readout line order before re-sorting, is referred to herein as an "input image" or "unsorted image".

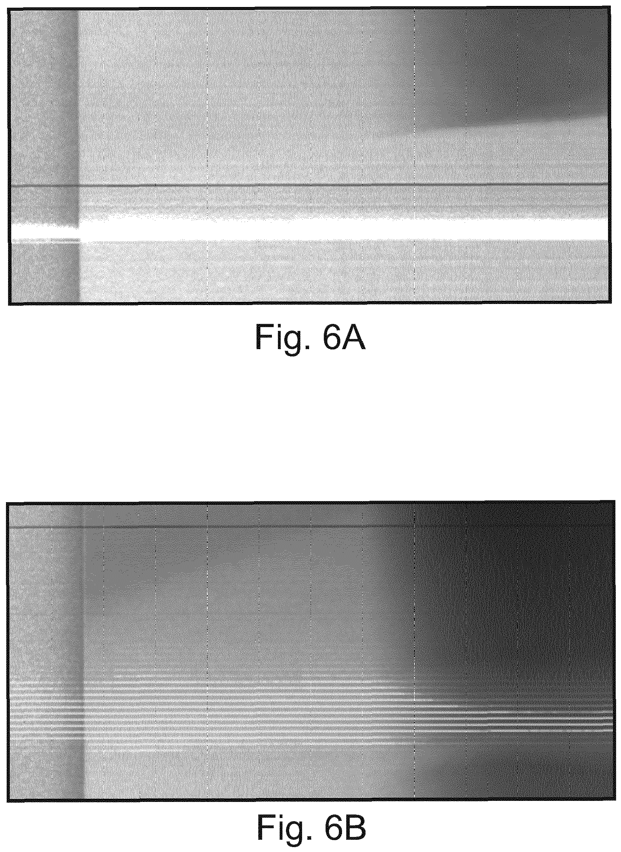

Fig. 6 illustrates the effects of an interlaced readout versus a progressive readout on stripe noise artifacts. Fig. 6A illustrates a wide stripe appearing in an image, as discussed above in relation to Fig. 3D, with the image having been obtained using a progressive readout. Fig. 6B shows an image of the same subject under the influence of the same EMI, except that this time the image has been captured using an interlaced readout. Fig. 6B shows the image following re-sorting (here, de-interlacing). As can be seen, the effect of the interlaced readout and subsequent re-sorting is that the interference is now dispersed over a larger number of lines, having been sampled at a lower sampling frequency, and thus forms a higher frequency pattern in the image. High-frequency patterns such as that shown in Fig. 6B are more capable of being removed by a stripe filter than the low-frequency patterns a shown in Fig. 6A.

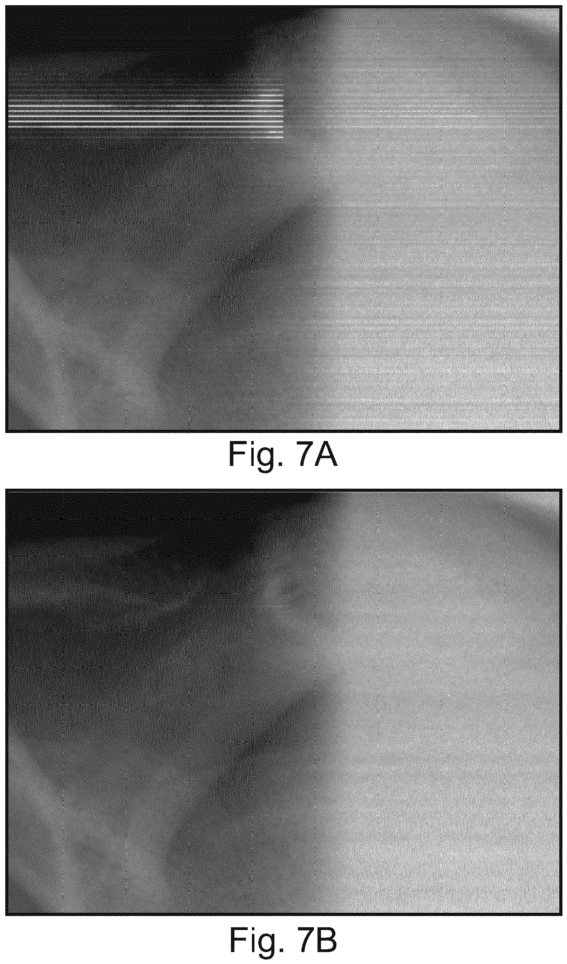

Fig. 7 illustrates the removal of such a high-frequency pattern by a stripe filter. Fig. 7A shows a high-frequency interference pattern such as that in Fig. 6B, which is produced as a result of the interlaced scan, while Fig. 7B shows the same image subsequent to application of the stripe filter. The interference pattern has been removed.

One example of a simple de-striping algorithm that may be used according to the present disclosure includes apply a one-dimensional (column direction) small sized median filter kernel, and subtracting the median filtered image from the original image to obtain a pattern of high-frequency EMI stripes. A further optional stage includes applying another median filter with a larger kernel in the row direction to maintain lines which are smaller than the number of image columns, and subtracting this stripe image from the original image to obtain the stripe free image. It will be understood that other types of stripe filter are possible which may be more sophisticated but that the filter described herein is sufficiently effective in removing high-frequency patterns.

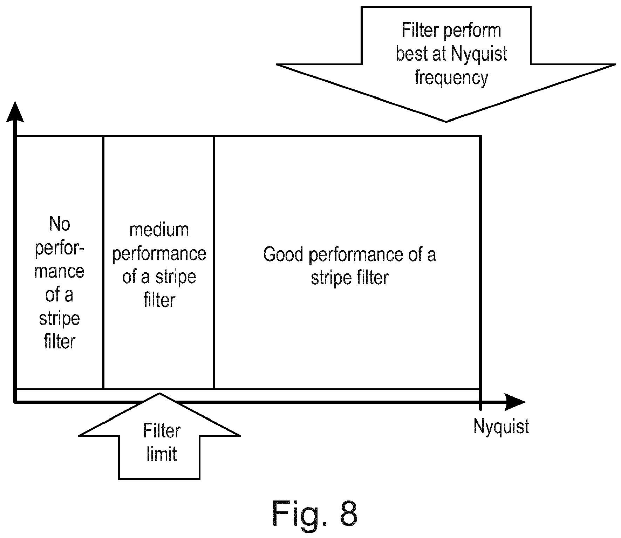

Fig. 8 illustrates the challenges associated with the use of such stripe filters. Use of smaller kernels allows higher frequencies to be removed. High frequency patterns are unlikely to convey anatomical information and can readily be removed. Enlarging the kernel allows the removal of lower frequency patterns, such as the wide stripes. The difficulty arises in setting the kernel size sufficiently large to remove low frequency patterns such as the wide stripes but without removing useful image information. As discussed above, the effects of using the interlaced scan is to change lower frequency patterns into higher frequency patterns, thus permitting the use of smaller kernel sizes and rendering the stripe filter more effective.

Stated differently, the effect of using interlaced readout is to obtain multiple patient images instead of a single one. Each of the half-images "odd" and "even" (the odd and even fields) covers the whole detector and the whole patient but is distorted by a factor of two. The perturbation takes place in the time domain. So a pattern covering 12 lines in a progressively read out image will result in a 12-line wide stripe. Using an interlaced readout with re-sorting, the "wide stripe" is now transformed into a high frequency perturbation: the pattern extends over 24 lines but only every other line is effected, e.g. the "odd" lines, while the "even" lines in between are unaffected. When the pattern is not periodical, it is unlikely that the same location of the patient that was effected by EMI in the "odd" half-image will also be effected in the "even" half-image. The stripe filter can now be applied to remove this high-frequency pattern. This may be done in a way that changes only the values of the "odd" lines (normal filters would leave the average value in the image, without stripes). Each object in the image that extends over several lines will be sampled at different points in time. So each of these lines may be differently affected by the EMI perturbation. After correction of these EMI patterns in the input image, the image is re-sorted. Any remaining deviation from the true signal will now appear as a high-frequency pattern which can be removed by the stripe filter.

As mentioned above, variants to the systems and methods described above are possible. For example, multiple sub-images, for example eight instead of two, may be produced with a similar regular EMI pattern. Multiple sub-images may be produced with random line addressing (e.g. line 1,5,12,14,17,21,... until all lines have been addressed). Another option is to use multiple incomplete readouts. Normally each line is read out once. Lines may be partly read out multiple times N (e.g. N=10) at random time points and with averaging being applied (or median values or other methods that suppress outliers) on the signal portions. Stated differently, multiple readouts are performed where for each single readout only parts of the X-ray signal are integrated at different time points. The multiple readouts can subsequently be averaged to obtain an EMI compensated signal. This would reduce the EMI pattern because the main signal will remain constant during repeated sampling while the EMI signal is not fixed, with its amplitude being time-dependent. Of course, this method leads to longer readout times of the image data. A further option is to apply interlacing also to pixel columns. One example may comprise generating four sub-images including all combinations of even and odd columns and lines. This method may require detector modifications and may lead to longer readout times in total.

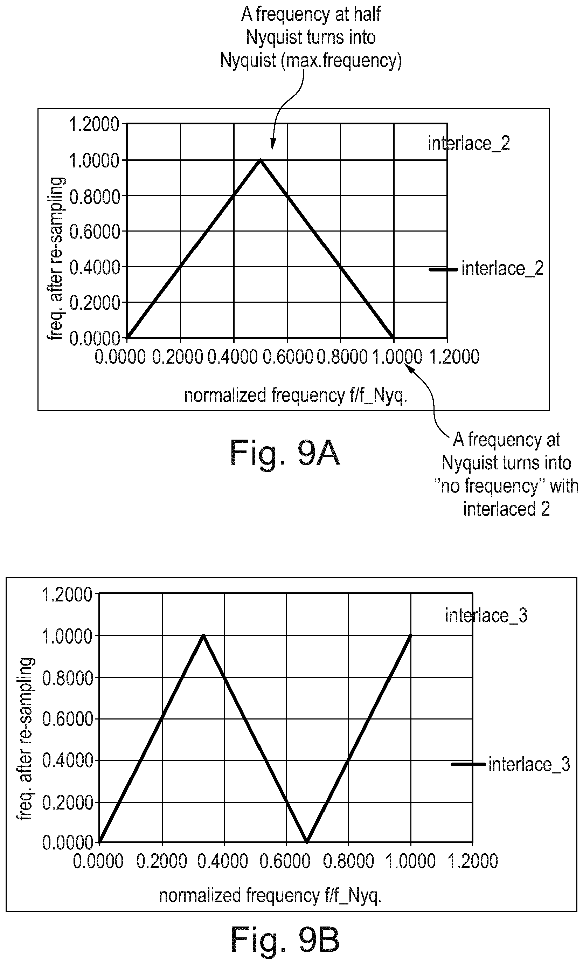

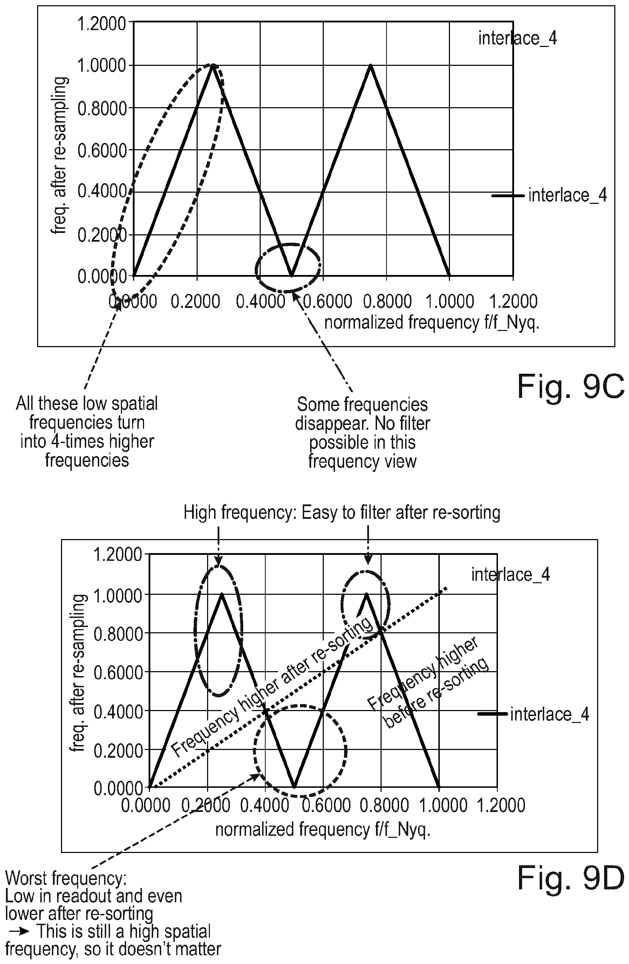

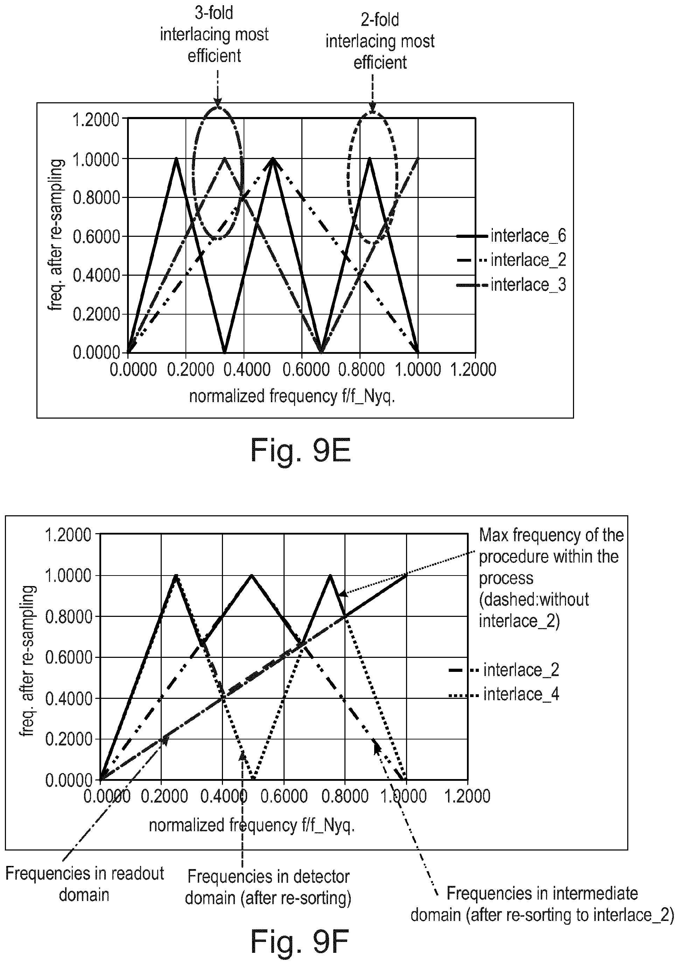

Figs. 9A-F illustrate the relative merits of various multifold interlaced readout modes in relation to different noise frequencies. Fig. 9A relates to twofold interlacing and illustrates how the spatial frequency of the artefact normalized with respect to the Nyquist frequency shifts as a result of the re-sampling described herein. As can be seen, a noise frequency in the input image which is equal to the Nyquist frequency turns into no frequency in the re-sorted image. On the other hand, a noise frequency at half Nyquist in the input image turns into a Nyquist or maximum frequency in the re-sorted image. As shown in Fig. 9B, a noise pattern in the input image at the Nyquist frequency ends up back at the Nyquist frequency in the resorted image, so there may be little value in odd interlacing. Fig. 9C shows how the frequencies change when using fourfold interlacing. As indicated on the left of the graph, low spatial frequencies turn into four times higher spatial frequencies. As indicated in the middle of the diagram, some frequencies disappear. Fig. 9D illustrates the relative effectiveness of the resampling in relation to various noise frequencies using fourfold interlacing. As seen in the graph, there are some frequencies which become higher after re-sorting and which are therefore easy to remove using the stripe filter. Some frequencies, however, fall below the equivalence line and thus become lower after re-sorting. These frequencies may still be removable using the stripe filter, but the effectiveness of the filter will be lower. Fig. 9E illustrates the relative effectiveness of twofold, threefold, and sixfold interlacing, illustrating those frequencies for which the respective interlacing methods are most effective.

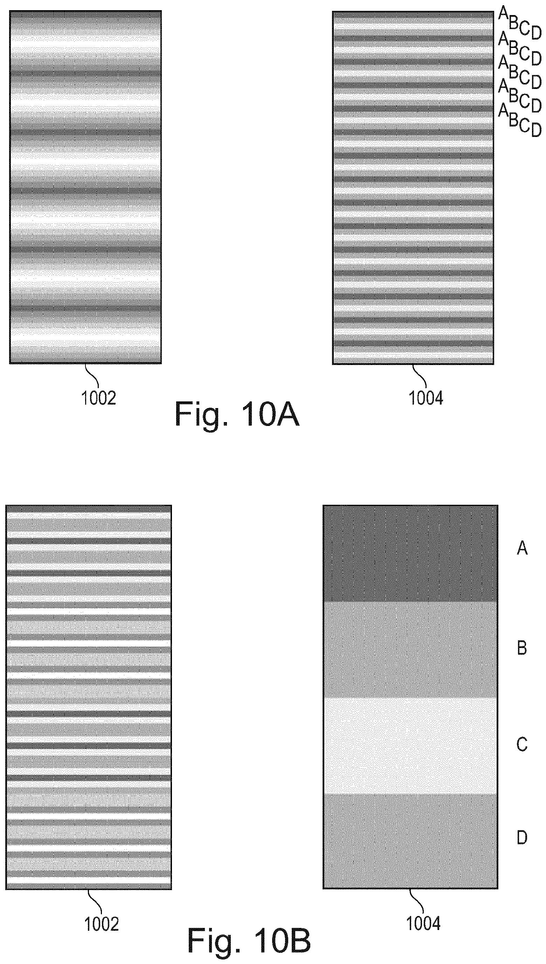

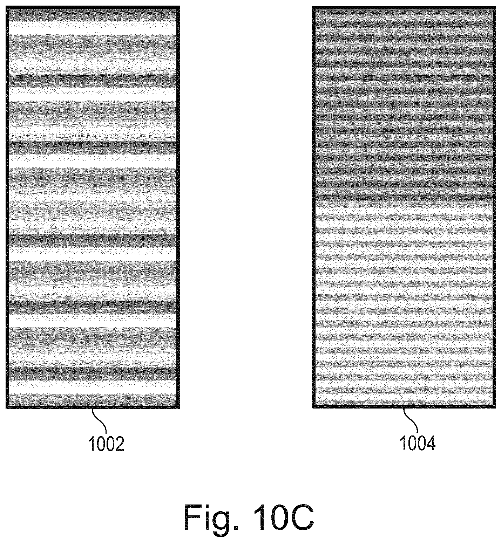

Figs. 10A-C illustrate the effects of the re-sorting on the spatial frequency of noise at various frequencies. Fig. 10A shows two input images, with the left hand image 1002 containing a low frequency oscillation (with an eight-line period), and with the right hand image 1004 containing a critical frequency oscillation (in this case with a four-line period, representing the sampling worst-case). The letters to the rights of the image indicate which line ends up in which image using an interlaced readout followed by re-sorting. Fig. 10B shows the two images 1002, 1004 after re-sorting. As can be seen, the low frequency oscillation has become a high frequency oscillation, with the high frequency being four times the low frequency. This high-frequency pattern can readily be corrected using the stripe filter. The worst-case scenario in image 1004 turns into a situation where no EMI pattern is visible inside any of the four sub-images. No stripe can be removed in this case. Some frequencies disappear with resorting. Fig. 10C shows the same two images 1002, 1004 after a subsequent additional re-sorting step using twofold interlacing. As can be seen on the right of the image, the worst-case scenario is no longer critical. The high-frequency stripes resulting from the additional operation can be removed. This combination of the fourfold interlacing and the twofold interlacing provides surprising improvement in the filtering of stripes. Referring back to Fig. 9F, it can be seen that, in this arrangement, most frequencies end up as high frequencies in one of the three images, providing for easy filtration, with no blind spot in the frequency domain.

In addition to digital radiography, the subject-matter described herein may also find application in the field of fluoroscopy.

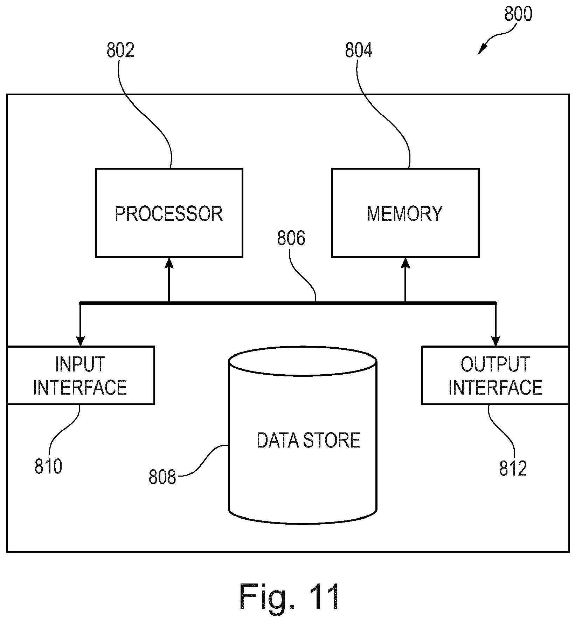

Referring now to Fig. 11, a high-level illustration of an exemplary computing device 800 that can be used in accordance with the systems and methodologies disclosed herein is illustrated. The computing device 800 includes at least one processor 802 that executes instructions that are stored in a memory 804. The instructions may be, for instance, instructions for implementing functionality described as being carried out by one or more components discussed above or instructions for implementing one or more of the methods described above. The processor 802 may access the memory 804 by way of a system bus 806. In addition to storing executable instructions, the memory 804 may also store conversational inputs, scores assigned to the conversational inputs, etc.

The computing device 800 additionally includes a data store 808 that is accessible by the processor 802 by way of the system bus 806. The data store 808 may include executable instructions, log data, etc. The computing device 800 also includes an input interface 810 that allows external devices to communicate with the computing device 800. For instance, the input interface 810 may be used to receive instructions from an external computer device, from a user, etc. The computing device 800 also includes an output interface 812 that interfaces the computing device 800 with one or more external devices. For example, the computing device 800 may display text, images, etc. by way of the output interface 812.

It is contemplated that the external devices that communicate with the computing device 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 800 may be a distributed system. Thus, for instance, several devices may be in communication by way of a network connection and may collectively perform tasks described as being performed by the computing device 800.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

While the invention has been illustrated and described in detail in the drawings and foregoing description, such illustration and description are to be considered exemplary and not restrictive. The invention is not limited to the disclosed embodiments.

Other variations to the disclosed embodiments can be understood and effected by those skilled in the art, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used advantageously. A computer program may be stored/distributed on a suitable medium, such as an optical storage medium or a solid-state medium supplied together with or as part of other hardware, but may also be distributed in other forms, such as via the internet or other wired or wireless communications systems. Any reference signs in the claims should not be construed as limiting the scope.

## Claims

1. A method for removing stripe noise artifacts from a digital image, the method comprising:
- receiving the digital image as an input image captured by a detector using a non-progressive readout mode in which a readout line order in the time domain differs from a detector line order in the spatial domain;
- re-sorting lines in the input image to correspond to their detector line order in the spatial domain, wherein the re-sorting causes a cluster of noise-affected lines which are adjacent in the input image to be dispersed in the re-sorted image; and
- applying a stripe filter to the re-sorted image to remove the stripe noise artifacts.

2. The method of claim 1, wherein the non-progressive readout mode comprises an interlaced readout mode comprising at least first and second consecutive readout cycles, wherein a respective group of lines is read out during each readout cycle.

3. The method of claim 2, wherein the interlaced readout mode is a twofold interlaced readout mode, with odd-numbered lines being read out during one of the first and second readout cycles, and even-numbered lines being read out during the other of the first and second cycles.

4. The method of claim 2, wherein the interlaced readout mode comprises more than two consecutive readout cycles, with each readout cycle being associated with a respective group of lines.

5. The method of claim 4, wherein either (i) the interlaced readout mode comprises a twofold interlaced readout and wherein the re-sorting comprises a twofold re-sorting followed by a fourfold re-sorting, or (ii) the interlaced readout mode comprises a fourfold interlaced readout and wherein the re-sorting comprises a fourfold re-sorting followed by a twofold re-sorting.

6. The method of any preceding claim, wherein the non-progressive readout mode operates to read out the lines from the detector as a whole, or from a said group, in a random line order.

7. The method of any preceding claim, further comprising applying a stripe filter to the input image before re-sorting.

8. The method of claim 7, wherein applying the stripe filter before re-sorting comprises generating a map identifying lines in the input image that are affected by stripe noise and lines that are unperturbed, with applying the stripe filter to the re-sorted image comprising modifying only the unperturbed lines.

9. A computing device comprising a processor configured to perform the method of any of claims 1-8.

10. A computer-readable medium comprising instructions which, when executed by a computing device, enable the computing device to carry out the method of any of claims 1-8.
